# EUROPÄISCHE PATENTSCHRIFT

(11) **EP 0 454 130 B1**
(45) Veröffentlichungstag und Bekanntmachung des Hinweises auf die Patenterteilung: **21.12.1994**
(21) Anmeldenummer: 91106716.3
(22) Anmeldetag: 25.04.1991
(51) Int. Cl.: C08L 83/04, C09D 183/04, C08G 77/38

(54) **Vernetzbare Zusammensetzungen und deren Verwendung zur Herstellung von klebrige Stoffe abweisenden Überzügen**
Curable compositions and their use for preparing release coatings.
Compositions durcissables et leur application dans des revêtements anti-adhésifs

(30) Priorität: 26.04.1990 DE 4013280
(43) Veröffentlichungstag der Anmeldung: 30.10.1991
(73) Patentinhaber: WACKER-CHEMIE GMBH, D-81737 München (DE)
(72) Erfinder: Hockemeyer, Friedrich, W-8261 Marktl am Inn (DE); Herzig, Christian, Dr., W-8221 Taching (DE)

(56) Entgegenhaltungen:
- EP-A- 0 018 624
- EP-A- 0 329 167

## Beschreibung

Vernetzbare Zusammensetzungen auf Grundlage von
(1) Si-gebundene Vinylgruppen aufweisendem Organopolysiloxan
(2) Si-gebundene Wasserstoffatome aufweisendem Organopolysiloxan und
(3) die Anlagerung von Si-gebundenem Wasserstoff an aliphatische Doppelbindung förderndem Katalysator
sind aus US-A 3 445 420 (ausgegeben 20. Mai 1969, G. J. Kookootsedes et al., Dow Corning Corporation) und GB-A 1 374 792 (ausgegeben 20. November 1974, J. A. Colquhoun et al., Dow Corning Ltd.) bekannt.

In US-A 4 347 346 (ausgegeben 31. August 1982, R. P. Eckberg, General Electric Company), US-A 4 476 166 (ausgegeben 9. Oktober 1984, R. P. Eckberg, General Electric Company) und US-A 4 504 645 (ausgegeben 12. März 1985, K. C. Melancon, Minnesota Mining and Manufacturing Company) ist beschrieben, daß in vernetzbaren Beschichtungszusammensetzungen auf Grundlage der oben genannten Bestandteile (1) bis (3) als Bestandteil (1) außer Organopolysiloxan mit Si-gebundenen Vinylgruppen auch Organopolysiloxan mit anderen Alkenylgruppen, wie Si-gebundenen Allylgruppen, eingesetzt werden kann.

Aus US-A 4 609 574 (ausgegeben 2. September 1986, J. R. Keryk et al., Dow Corning Corporation) ist bekannt, daß vernetzbare Beschichtungszusammensetzungen auf Grundlage von (1) Organopolysiloxan mit höheren Alkenylgruppen, wie Si-gebundenen Hexenylgruppen, und den oben beschriebenen Bestandteilen (2) und (3) rasch härten.

Es bestand die Aufgabe neue Zusammensetzungen auf Grundlage von Organopolysiloxanmassen bereitzustellen, die durch Anlagerung von Si-gebundenen Wasserstoff an aliphatische Doppelbindungen in Gegenwart von Katalysatoren vernetzen. Ferner bestand die Aufgabe, neue Zusammensetzungen für die Herstellung von klebrige Stoffe abweisenden Überzügen bereitzustellen. Des weiteren bestand die Aufgabe Zusammensetzungen bereitzustellen, die bei niedrigen Temperaturen, wie Raumtemperatur, rasch vernetzen und dabei klebfreie und migrationsfreie Überzüge ergeben, so daß eine unerwünschte Wanderung der klebrige Stoffe abweisenden Überzüge verhindert wird und dadurch die Klebkraft der Klebstoffe, mit denen die Überzüge in Berührung kommen, praktisch nicht beeinträchtigt wird. Weiterhin bestand die Aufgabe Zusammensetzungen bereitzustellen, die abriebfeste Beschichtungen ergeben. Die Aufgabe wird durch die Erfindung gelöst.

Gegenstand der Erfindung sind vernetzbare Zusammensetzungen auf Grundlage von
(1) alkenyloxyfunktionellem Organopolysiloxan enthaltend Si-gebundene Reste Y der Formel

   -(CH₂)₂-R¹-(A-R²)_{z}-O-R³-CH=CH₂, (I)

   wobei A -O-, -S- oder 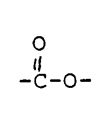 R¹ einen linearen oder verzweigten Alkylenrest mit 1 bis 7 Kohlenstoffatom(en) je Rest oder einen Cycloalkylenrest mit 5 bis 7 Kohlenstoffatomen je Rest,
   R² einen linearen oder verzweigten Alkylenrest mit 2 bis 4 Kohlenstoffatomen je Rest, der durch eine Hydroxygruppe, Methoxygruppe, Ethoxygruppe oder Trimethylsiloxygruppe substituiert sein kann,
   R³ einen linearen oder verzweigten Alkylenrest mit 1 bis 7 Kohlenstoffatom(en) je Rest und
   z 0, 1 oder 2 bedeutet,
(2) Si-gebundene Wasserstoffatome aufweisendem Organopolysiloxan und
(3) die Anlagerung von Si-gebundenem Wasserstoff an aliphatische Doppelbindung förderndem Katalysator
Gegenstand der Erfindung ist weiterhin ein Verfahren zur Herstellung von klebrige Stoffe abweisenden Überzügen durch Auftragen von Zusammensetzungen, die enthalten
(1) alkenyloxyfunktionelles Organopolysiloxan enthaltend Si-gebundene Reste Y der Formel

   -(CH₂)₂-R¹-(A-R²)_{z}-O-R³-CH=CH₂, (I)

   wobei R¹, R², R³, A und z die oben dafür angegebene Bedeutung haben,
(2) Si-gebundene Wasserstoffatome aufweisendes Organopolysiloxan und
(3) die Anlagerung von Si-gebundenem Wasserstoff an aliphatische Doppelbindung fördernden Katalysator
auf die klebrige Stoffe abweisend zu machenden Oberflächen und anschließende Härtung der Zusammensetzungen.

Vorzugsweise enthalten die alkenyloxyfunktionellen Organopolysiloxane (1) mindestens 2 Si-gebundene Reste Y.

Bevorzugt werden als alkenyloxyfunktionelle Organopolysiloxane (1) solche der allgemeinen Formel

Y_{c}R_{3-c}SiO(SiR₂O)ₙ(SiRYO)ₘSiR_{3-c}Y_{c} , (II)

wobei Y die oben dafür angegebene Bedeutung hat,
R gleich oder verschieden sein kann, einen einwertigen, gegebenenfalls substituierten Kohlenwasserstoffrest mit 1 bis 18 Kohlenstoffatom(en) je Rest,
c 0 oder 1, bevorzugt 1,
n 0 oder eine ganze Zahl von 1 bis 5000, bevorzugt von 1 bis 1000 und
m 0 oder eine ganze Zahl von 1 bis 150, bevorzugt von 1 bis 100 bedeutet, verwendet, mit der Maßgabe, daß durchschnittlich mindestens 1,5 Si-gebundene Reste Y enthalten sind.

Innerhalb bzw. entlang der Organopolysiloxankette der oben angegebenen Formel können, was bei derartigen Formeln üblicherweise nicht dargestellt wird, zusätzlich zu den Diorganosiloxaneinheiten SiR₂O noch andere Siloxaneinheiten vorliegen. Beispiele für solche anderen, meist jedoch lediglich als Verunreinigungen vorliegende Siloxaneinheiten sind solche der Formeln RSiO_{3/2}, R₃SiO_{1/2} und SiO_{4/2}, wobei R jeweils die oben dafür angegebene Bedeutung hat. Die Menge an solchen anderen Siloxaneinheiten beträgt vorzugsweise höchstens 10 Mol %, insbesondere höchstens 1 Mol %.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- Naphtyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest. Bevorzugt ist der Methylrest.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Schon wegen der leichteren Zugänglichkeit sind vorzugsweise mindestens 50 %, insbesondere mindestens 90 %, der Anzahl der Reste R in den alkenyloxyfunktionellen Organopolysiloxanen (1) Methylreste.

Beispiele für Alkylenreste R¹ sind solche der Formel

-CH₂-

-(CH₂)₂-

-CH(CH₃)- und

-(CH₂)₃-.

Beispiele für Cycloalkylenreste R¹ sind der Cyclohexylenrest und der Methylcyclohexylenrest.

Bevorzugt ist als Rest R¹ derjenige der Formel

-CH₂-.

Bevorzugt ist A Sauerstoff -O-.

Beispiele für Reste R² sind solche der Formel

-(CH₂)₂-

-(CH₂)₃-

-CH₂CH(CH₃)CH₂-

-CH₂CH(OH)CH₂-

-CH₂CH(OCH₃)CH₂-

-CH₂CH(OC₂H₅)CH₂- und

-CH₂CH(OSi(CH₃)₃)CH₂- .

Beispiele für Alkylenreste R¹ gelten im vollen Umfang für Alkylenreste R³.

Bevorzugte Beispiele für Reste Y sind solche der Formel

-(CH₂)₃-O-CH₂-CH=CH₂ und

-(CH₂)₃-O-CH₂-CH₂-O-CH₂-CH=CH₂ .

Sollen die erfindungsgemäßen Zusammensetzungen zumindest praktisch frei von Lösungsmitteln sein, was z. B. für den Umweltschutz erwünscht ist, Gefahren, z. B. durch Explosion, vermeidet, Transport- und Lagerkosten verringert und außerdem den Aufwand für die Verdampfung des Lösungsmittels vermeidet, beträgt die Viskosität der alkenyloxyfunktionellen Organopolysiloxane (1) vorzugsweise höchstens 5 000 mPa·s bei 25°C, insbesondere höchstens 1 000 mPa·s bei 25°C. Werden aber bei den erfindungsgemäßen Zusammensetzungen Lösungsmittel mitverwendet, was nicht bevorzugt ist, so können die alkenyloxyfunktionellen Organopolysiloxane (1) Viskositäten von vorzugsweise 5 000 bis 5·10⁶ mPa·s bei 25°C, insbesondere von 10⁶ bis 4·10⁶ mPa·s bei 25°C haben.

Ein Verfahren zur Herstellung der alkenyloxyfunktionellen Organopolysiloxane (1) ist in der deutschen Anmeldung mit dem Aktenzeichen P 39 14 896.3 beschrieben.

Die alkenyloxyfunktionellen Organopolysiloxane (1) werden vorzugsweise hergestellt, in dem eine organische Verbindung (1') der allgemeinen Formel

H₂C=CH-R¹-(A-R²)_{z}-O-R³-CH=CH₂ ,

wobei R¹, R², R³, A und z die oben dafür angegebene Bedeutung haben,
an ein Si-gebundene Wasserstoffatome aufweisendes Organopolysiloxan (2') in Gegenwart von die Anlagerung von Si-gebundenem Wasserstoff an aliphatische Doppelbindung förderndem Katalysator (3') angelagert wird und von den so erhaltenen alkenyloxyfunktionellen Organopolysiloxanen (1) gegebenenfalls überschüssige organische Verbindung destillativ entfernt wird.

Als Si-gebundene Wasserstoffatome aufweisendes Organopolysiloxan (2'), an die organische Verbindung (1') angelagert wird, wird vorzugsweise Organopolysiloxan der Formel

H_{g}R_{3-g}SiO(SiR₂O)ₖ(SiRHO)ₗSiR_{3-g}H_{g} ,

wobei R die oben dafür angegebene Bedeutung hat,
g 0 oder 1,
k 0 oder eine ganze Zahl von 1 bis 1000 und
l 0 oder eine ganze Zahl von 1 bis 10 bedeutet,
mit der Maßgabe, daß mindestens ein Si-gebundenes Wasserstoffatom, bevorzugt mindestens zwei Si-gebundene Wasserstoffatome, je Molekül enthalten sind,
verwendet.

Die alkenyloxyfunktionellen Organopolysiloxane (1) können auch hergestellt werden, in dem die oben genannte organische Verbindung (1') an ein Silan (2'') mit einem Si-gebundenen Wasserstoff in Gegenwart von die Anlagerung von Si-gebundenem Wasserstoff an aliphatische Doppelbindung förderndem Katalysator (3') ingelagert wird, wobei ein alkenyloxyfunktionelles Silan mit einem Si-gebundenen Rest Y erhalten wird, das anschließend in ein alkenyloxyfunktionelles Organopolysiloxan durch Mischhydrolyse mit Chlor- oder Alkoxysilanen und/oder durch Kondensation mit kondensationsfähigen Organopolysiloxanen in an sich bekannter Weise umgewandelt wird.

Als Silan (2'') mit einem Si-gebundenen Wasserstoffatom wird vorzugsweise solches der allgemeinen Formel

RₕHSiX₃₋ₕ ,

wobei R die oben dafür angegebene Bedeutung hat,
X ein Halogenatom, oder ein C₁₋₈-Alkoxyrest ist und
h 0, 1 oder 2 ist,
verwendet.

Bevorzugte Beispiele für die organische Verbindung (1') sind solche der Formel

H₂C=CH-CH₂-O-CH₂-CH=CH₂ und

H₂C=CH-CH₂-O-CH₂-CH₂-O-CH₂-CH=CH₂ .

Die organischen Verbindungen (1') werden vorzugsweise in solchen Mengen eingesetzt, daß mindestens 1 Mol, insbesondere 1,5 Mol, organische Verbindung (1') je Grammatom Si-gebundener Wasserstoff in dem Organopolysiloxan (2') bzw. in dem Silan (2'') vorliegen. Besonders bevorzugt wird die organische Verbindung (1') in solchen Mengen eingesetzt, daß 4 bis 8 Mol organische Verbindung (1') je Grammatom Si-gebundener Wasserstoff in dem Organopolysiloxan (2') bzw. in dem Silan (2'') vorliegen. Durch diesen Überschuß an organischer Verbindung (1') wird erreicht, daß die Addition nicht an beiden, sondern größten Teils nur an einer der beiden endständigen aliphatischen Doppelbindungen in der organischen Verbindung (1') stattfindet, die Diaddition also zurückgedrängt wird.

So tritt beispielsweise bei der Umsetzung von 6 Mol bis 8 Mol Diallylether mit 1 Mol α,ω-Dihydrogendimethylpolysiloxan in geringem Umfang eine Diaddition an Diallylether ein, so daß in einem geringen Ausmaß (5 Mol % bis 25 Mol %) auch allyloxypropylfunktionelle Dimethylpolysiloxane (1) erhalten werden, die neben den endständigen Allyloxypropyldimethylsiloxaneinheiten Brückeneinheiten der Formel

O_{1/2}(CH₃)₂Si(CH₂)₃O(CH₂)₃Si(CH₃)₂O_{1/2}

enthalten.

Alkenylfunktionelle Organopolysiloxane (1), die durch die Diaddition bedingt solche Brückeneinheiten enthalten, stören bei der Verwendung in den erfindungsgemäßen Zusammensetzungen nicht.

Die so erhaltenen alkenyloxyfunktionellen Organopolysiloxane (1) können anschließend mit Organopolysiloxan (4') ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneineiten äquilibriert werden. Alkenyloxyfunktionelle Organopolysiloxane (1) verschiedener Art können auch miteinander äquilibriert werden.

Bei den erfindungsgemäßen Zusammensetzungen kann eine Art von alkenyloxyfunktionellem Organopolysiloxan oder verschiedene Arten von alkenyloxyfunktionellen Organopolysiloxanen eingesetzt werden.

Als Si-gebundene Wasserstoffatome aufweisende Organopolysiloxane (2) können auch bei den erfindungsgemäßen Zusammensetzungen die gleichen Si-gebundene Wasserstoffatome aufweisenden Organopolysiloxane verwendet werden, die bei allen bisher bekannten Zusammensetzungen aus Vinylgruppen aufweisendem Organopolysiloxan, Si-gebundene Wasserstoffatome aufweisendem Organopolysiloxan und die Anlagerung von Si-gebundenem Wasserstoff an aliphatische Doppelbindung förderndem Katalysator eingesetzt werden konnten.

Vorzugsweise enthalten die Organopolysiloxane (2) mindestens 3 Si-gebundene Wasserstoffatome.

Die Organopolysiloxane (2) sind bevorzugt solche der allgemeinen Formel

H_{d}R_{3-d}SiO(SiR₂O)_{q}(SiRHO)ₚSiR_{3-d}H_{d} , (III)

wobei R die oben dafür angegebene Bedeutung hat,
d 0 oder 1,
q 0 oder eine ganze Zahl von 1 bis 100 und
p 0 oder eine ganze Zahl von 1 bis 100 ist,
mit der Maßgabe, daß mindestens 3 Si-gebundene Wasserstoffatome je Molekül enthalten sind.
Bevorzugt ist d 0 und bevorzugt ist das Verhältnis q : p 9 : 1 bis 1 : 9, besonders bevorzugt ist das Verhältnis q : p 9 : 1 bis 2,5 : 1.
Bevorzugt sind die Reste R in den Organopolysiloxanen (2) Methyl-, Ethyl- oder Phenylreste.

Vorzugsweise beträgt der Anteil der Si-gebundenen Wasserstoffatome 0,2 bis 1,66 Gew.-%, insbesondere 1,2 bis 1,66 Gew.-%, bezogen auf das Gewicht der Organopolysiloxane (2).

Als Organopolysiloxane (2) können auch sternförmige Verbindungen der allgemeinen Formel

Si[(OSiRH)_{y}(OSiR₂)ₓOSiR_{3-d}H_{d}]₄ ,

sein, wobei R die oben dafür angegebene Bedeutung hat und
d 0 oder 1, bevorzugt 0 ist,
x 0 oder eine ganze Zahl von 1 bis 4 und
y 0 oder eine ganze Zahl von 1 bis 4 ist,
mit der Maßgabe, daß mindestens 3 Si-gebundene Wasserstoffatome je Molekül enthalten sind.

Beispiele für Organopolysiloxane (2) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan- Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Verfahren zum Herstellen von Organopolysiloxanen (2), auch von solchen Organopolysiloxanen (2) der bevorzugten Art, sind allgemein bekannt.

Organopolysiloxan (2) wird vorzugsweise in Mengen von 0,5 bis 6, insbesondere 1 bis 3 Grammatom Si-gebundenen Wasserstoffs je Mol Si-gebundenen Restes Y in den alkenyloxyfunktionellen Organopolysiloxanen (1) eingesetzt.

Als die Anlagerung von Si-gebundenem Wasserstoff an aliphatische Doppelbindung förderndem Katalysator (3) können auch bei den erfindungsgemäßen Zusammensetzungen die gleichen Katalysatoren verwendet werden, die auch bei den bisher bekannten Zusammensetzungen zum Vernetzen von aliphatische Doppelbindungen enthaltenden Organopolysiloxanen mit Verbindungen, die Si-gebundenen Wasserstoff enthalten, zur Förderung der Vernetzung eingesetzt werden konnten. Es werden vorzugsweise Platinmetalle oder deren Verbindungen, insbesondere Platin und dessen Verbindungen eingesetzt. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. PtCl₄, H₂PtCl₆ · 6H₂O, Na₂PtCl₄ · 4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆ · 6H₂O und Cyclohexanon, Platin-Vinylsiloxankomplexe, insbesondere Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, Ammonium-Platinkomplexe gemäß EP-B 110 370, Cyclooctadien-Platindichlorid und Norbornadien-Platindichlorid.

Weitere Beispiele für Katalysatoren (3) sind solche, die bei Raumtemperatur in der Zusammensetzung schwerlöslich bei erhöhter Temperatur aber löslich sind, wie Gamma-picolin-Platindichlorid, Cyclopentadien-Platindichlorid, Cyclooctadien-Platindichlorid und Mischungen aus Platinvinylsiloxankomplexen, insbesondere Platin-divinyltetramethyldisiloxankomplexen, und Dimethylpolysiloxanen, die Diphenylsiloxaneinheiten, bevorzugt ca. 10 Mol % Diphenylsiloxaneinheiten enthalten, wobei die Mischungen bevorzugt ca. 1 Gew.-% Platin, berechnet als Element, enthalten. Solche Katalysatoren werden vorzugsweise in inhibitorfreien Zusammensetzungen eingesetzt.

Katalysator (3) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organopolysiloxane (1) und (2) eingesetzt.

Als weiteren Bestandteil können bei den erfindungsgemäßen Zusammensetzungen die Anlagerung von Si-gebundenen Wasserstoff an aliphatische Doppelbindung bei Raumtemperatur verzögernde Mittel (4), sogenannte Inhibitoren, mitverwendet werden, auch wenn deren Mitverwendung nicht bevorzugt ist. Als die Anlagerung von Si-gebundenem Wasserstoff an aliphatische Doppelbindung bei Raumtemperatur verzögernde Mittel (4) können auch bei den erfindungsgemäßen Zusammensetzungen alle die Anlagerung von Si-gebundenem Wasserstoff an aliphatische Doppelbindung bei Raumtemperatur verzögernde Mittel verwendet werden, die auch bisher für den gleichen Zweck verwendet werden konnten. Beispiele für die Anlagerung von Si-gebundenem Wasserstoff an aliphatische Doppelbindung bei Raumtemperatur verzögernde Mittel, sogenannte Inhibitoren, sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3 445 420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren gemäß US-A 2 476 166, wie eine Mischung aus Diallylmaleinat und Vinylacetat, und Inhibitoren gemäß US 4,504,645, insbesondere Maleinsäuremonoester der allgemeinen Formel

HOOC-CH=CH-COOR⁵,

wobei R⁵ einen organischen Rest, vorzugsweise einen einwertigen, gegebenenfalls halogenierten Kohlenwasserstoffrest mit 1 bis 12 Kohlenstoffatom(en) je Rest bedeutet. Beispiele für Reste R mit 1 bis 12 Kohlenstoffatom(en) je Rest gelten im vollen Umfang für Reste R⁵.

Weitere Beispiele für Inhibitoren, sind durch Bestrahlung mit Ultraviolettlicht zerstörbare Inhibitoren, z. B. Umsetzungsprodukte von Benzophenonderivaten und Alkinolen.

Vorzugsweise wird die Anlagerung von Si-gebundenem Wasserstoff an aliphatische Doppelbindung bei Raumtemperatur verzögerndes Mittel (4) in Mengen von 0,001 bis 10 Gew.-%, bezogen auf das Gesamtgewicht der Organopolysiloxane (1) und (2), eingesetzt. Wird Maleinsäuremonoester als Inhibitor (4) verwendet, so wird er bevorzugt in Mengen von 0,001 bis 3 Gew.-%, besonders bevorzugt 0,005 bis 0,05 Gew.-%, bezogen auf das Gesamtgewicht der Organopolysiloxane (1) und (2), eingesetzt.

Zur Einstellung des Trennwertes der mit den erfindungsgemäßen Zusammensetzungen herstellbaren klebrige Stoffe abweisenden Überzüge können in den erfindungsgemäßen Zusammensetzungen Siliconharze aus Einheiten der Formel

R⁴(CH₃)₂SiO_{1/2} und SiO₂ ,

sogenannte MQ-Harze, wobei R⁴ ein Wasserstoffatom, ein Methylrest, ein Allylrest oder ein Rest Y (Y hat die oben dafür angegebene Bedeutung), wie Allyloxypropylrest, ist und die Einheiten der Formel R⁴(CH₃)₂SiO_{1/2} gleich oder verschieden sein können, mitverwendet werden. Bei den Siliconharzen ist das Verhältnis von monofunktionellen Einheiten der Formel

R⁴(CH₃)₂SiO_{1/2}

zu tetrafunktionellen Einheiten der Formel

SiO₂

vorzugsweise 0,6 bis 2, bevorzugt 1,0 bis 1,5.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen ausweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten. Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der alkenyloxyfunktionellen Organopolysiloxane (1), eingesetzt.

Die Reihenfolge beim Vermischen der Bestandteile (1), (2), (3) und gegebenenfalls (4) ist zwar nicht entscheidend, für die Praxis hat es sich jedoch bewährt, die Komponente (3), also den Katalysator, dem Gemisch der anderen Bestandteile zuletzt zuzusetzen.

Vorzugsweise werden die erfindungsgemäßen Zusammensetzungen mit den Bestandteilen (1), (2), (3) und gegebenenfalls (4) in Form von Zweikomponenten-Massen bereitgestellt, wobei die Bestandteile (2) und (3) voneinander getrennt werden. Die zwei Komponenten können z. B. in einem Behälter mit zwei von einander getrennten Mischkammern vorliegen, wobei das Vermischen der beiden Komponenten kurz vor deren Verwendung über eine Mischdüse erfolgt.

Die Bestandteile (1), (2) und (3) werden vorzugsweise bei - 5°C bis 25°C miteinander vermischt. Die Topfzeit der Massen beträgt dabei vorzugsweise 1 bis 40 Minuten.

Die Vernetzung der bevorzugt verwendeten, inhibitorfreien Zusammensetzungen erfolgt vorzugsweise bei Raumtemperatur (23°C) bis 80°C in 2 bis 60 Sekunden. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet. Bei Raumtemperatur, d. h. bei 23°C, erfolgt die Vernetzung in 15 bis 60 Sekunden, bei einer Heiztemperatur von 60°C bis 80°C in 2 bis 15 Sekunden.

Die Temperatur des zu beschichtenden Substrats ist bei den kurzen Vernetzungszeiten wesentlich niedriger als die Heiztemperatur beispielsweise des Ofens. Die niedrigen Vernetzungstemperaturen und kurzen Vernetzungszeiten haben neben der Energieersparnis und der größeren Wirtschaftlichkeit den weiteren Vorteil, daß die zu beschichtenden Substrate thermisch wenig beansprucht werden, so daß beispielsweise Papier durch das Beschichten seine natürliche Feuchte nicht verliert und dimensionsstabil bleibt und auch thermoplastische Folien, wie Polyethylen-, Polypropylen- und Polyvinylchloridfolien, beschichtet werden können, ohne daß diese schrumpfen.

Die Zusammensetzungen ergeben nach der Vernetzung klebfreie und migrationsfreie Überzüge, so daß die Klebkraft der Klebstoffe, die mit den Überzügen in Berührung kommen praktisch nicht beeinträchtigt wird. Weiterhin werden Beschichtungen erhalten die abriebfest sind. Bei der Vernetzung der Zusammensetzungen, insbesondere bei Raumtemperatur, wird die Abriebsfestigkeit nicht immer gleich nach der Vernetzung der Beschichtungen erhalten, sondern die Abriebsfestigkeit wird teilweise erst nach weiterem Lagern der vernetzten Beschichtungen bei Raumtenperatur in 50 Minuten bis 24 Stunden erhalten.

Zur Vernetzung der inhibitorhaltigen Zusammensetzungen werden Temperaturen von mindestens 80°C benötigt. Die Topfzeit der Zusammensetzungen beträgt bei Raumtemperatur ca. 1 bis 12 Stunden. Der Vorteil in der Mitverwendung eines Inhibitors liegt lediglich in der Verlängerung der Topfzeit der Zusammensetzungen.

Sowohl die inhibitorfreien als auch die inhibitorhaltigen Zusammensetzungen können, obwohl nicht bevorzugt, außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Vernetzbare Zusammensetzungen, die anstelle der alkenyloxyfunktionellen Organopolysiloxane (1), Allylgruppen bzw. Hexenylgruppen aufweisende Organopolysiloxane enthalten, d.h. die anstelle der Si-gebundenen Reste Y in den Organopolysiloxanen (1) Si-gebundene Allyl- bzw. Hexenylreste aufweisen, vernetzen ebenfalls bei 23°C (Raumtemperatur) bis 80°C in wenigen Sekunden bis 1 Minute und ergeben klebfreie und migrationsfreie Beschichtungen, die nach kurzer Lagerung bei Raumtemperatur Abriebfestigkeit aufweisen.

Vernetzbare Zusammensetzungen dagegen, die anstelle der Si-gebundenen Reste Y in den Organopolysiloxanen (1) Si-gebundene Vinylreste aufweisen, d. h. solche der eingangs erwähnten Art, vernetzen bei Raumtemperatur nicht, sondern ergeben Beschichtungen, die nicht klebfrei und nicht migrationsfest sind, d. h. in den Klebstoff, der mit diesen Beschichtungen in Berührung kommt, wandern und die Klebkraft der Klebstoffe dadurch erheblich beeinträchtigen.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste. Insbesondere eignet sich für die Auftragung ein Mehrwalzensystem (4-5 Walzen), wie Gummi-Stahl-Gummi usw., bei dem der Film so oft geteilt wird, daß zum Schluß ein Auftrag von 0,6 bis 1,2 µm erhalten wird.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelndem Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren. Beim off-line Verfahren wird die Siliconzusammensetzung auf das Papier aufgetragen und vernetzt, dann in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt. Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 50 bis 500 m/min, bevorzugt 100 bis 300 m/min, betrieben werden.

Die in den folgenden Beispielen verwendete Mischung aus Platin-Divinyltetramethyldisiloxan-Komplex und Verdünnungsmittel wurde hergestellt wie folgt:
Zu einer Mischung aus 10 Gewichtsteilen H₂PtCl₆·6H₂O, 20 Gewichtsteilen 1,3-Divinyl-1,1,3,3-tetramethyldisiloxan und 50 Gewichtsteilen Ethanol wurden 20 Gewichtsteile Natriumbicarbonat gegeben. Das Gemisch wurde 30 Minuten unter Rühren zum Sieden unter Rückfluß erhitzt, dann 15 Stunden bei Raumtemperatur stehen gelassen und danach filtriert. Aus dem Filtrat wurden bei etwa 16 hPa (abs.) die flüchtigen Bestandteile abdestilliert. Als Rückstand wurden 17 Gewichtsteile einer Flüssigkeit erhalten, die in Benzol gelöst wurde. Die Lösung wurde filtriert und aus dem Filtrat das Benzol abdestilllert. Der Rückstand wurde mit Vinyldimethylsiloxaneinheiten als endständige Einheiten aufweisendem Dimethylpolysiloxan mit einer Viskosität von 1400 mPa.s bei 25°C als Verdünnungsmittel in solcher Menge vermischt, daß die Mischung 1 Gewichts-% Platin, berechnet als Element, enthält.

### Beispiel 1:

a) Zu einer Lösung von 600 g NaOH (15 Mol) in 600 ml Wasser werden 28 g Trimethylbenzylammoniumchlorid (0,1 Mol) zugegeben. Zu dieser Mischung werden dann 290 g Allylalkohol (5,0 Mol) und 425 g Allylchlorid (5,5 Mol) zugegeben. Die Reaktionsmischung wird acht Stunden bei 40 bis 60°C erhitzt. Der entstandene Natriumchlorid-Niederschlag wird dann weitgehend in Wasser aufgelöst. Die organische Phase wird abgetrennt und mit Natriumsulfat getrocknet. Mittels Destillation über eine kurze Vigreuxkolonne werden bei 92 bis 94°C 415 g Diallylether (85 % d. Th.) erhalten.
b) 600 g Diallylether, der wie oben unter a) beschrieben hergestellt wurde, werden auf Rückfluß erhitzt. Zu dem Diallylether werden unter Rühren innerhalb von 6 Stunden eine Mischung aus 210 g 1,1,3,3-Tetramethyldisiloxan und 60 mg Platin in Form einer Lösung von Platintetrachlorid in 1-Octen zugetropft. Nach weiteren 1,5 Stunden Rühren wird das Gemisch abgekühlt. 99 % der Si-gebundenen Wasserstoffatome des 1,1,3,3-Tetramethyldisiloxans sind dann umgesetzt. Dann werden bei 80°C und 5 hPa (abs.) die flüchtigen Bestandteile destillativ entfernt. Es werden 423 g eines hellgelben, klaren Öls mit einer Viskosität von 6,2 mm²·s⁻¹ bei 25°C und mit einer Jodzahl von 112 erhalten. Es wird ein 1,3-Allyloxypropyltetramethyldisiloxan der Formel

[CH₂=CHCH₂O(CH₂)₃Si(CH₃)₂]₂O ,

erhalten, wobei gemäß dem ¹H-NMR-Spektrum auch Brückeneinheiten der Formel

O_{1/2}(CH₃)₂Si(CH₂)₃O(CH₂)₃Si(CH₃)₂O_{1/2}

enthalten sind. Aus dem ¹H-NMR-Spektrum ist für das Verhältnis von Dimethylsiloxaneinheit zu Allyloxypropylgruppe ein Wert von 1,44 zu entnehmen.
c) 14,5 g des 1,3-Allyloxypropyltetramethyldisiloxans, dessen Herstellung oben unter b) beschrieben ist, werden mit 356 g einer Mischung von cyclischen Dimethylsiloxanen mit 3 bis 10 Siloxaneinheiten je Molekül und 1,5 g einer 30 %igen Lösung von Kaliumhydroxid in Methanol 8 Stunden bei 140°C äquilibriert. Zu dem Gemisch werden zuerst 1 g Eisessig und dann 5 g saure Tonerde zugegeben. Nach dem Filtrieren werden bei 120°C und 10⁻³ hPa (abs.) die flüchtigen Bestandteile destillativ entfernt. Gemäß dem ¹H-NMR-Spektrum wird ein in den endständigen Einheiten Allyloxypropyldimethylsiloxygruppen aufweisendes Dimethylpolysiloxan mit durchschnittlich ca. 150 Siloxaneinheiten erhalten, wobei in geringem Umfang auch Brückeneinheiten, wie oben unter b) beschrieben, enthalten sind, das eine Viskosität von 480 mm²·s⁻¹ bei 25°C und eine Jodzahl von 4,4 aufweist.
d) 100 Gewichtsteile des in den endständigen Einheiten Allyloxypropyldimethylsiloxygruppen aufweisenden Dimethylpolysiloxans mit einer Viskosität von 480 mm²·s⁻¹ bei 25°C, dessen Herstellung oben unter c) beschrieben ist, werden mit 2,5 Gewichtsteilen eines Mischpolymerisats aus Methylhydrogensiloxan- und Trimethylsiloxaneinheiten, das durchschnittlich 25 Methylhydrogensiloxaneinheiten je Molekül enthält, bei 23°C vermischt. Zu der Mischung wird 1 Gewichtsteil der Mischung aus Platin-Divinyltetramethyldisiloxan-Komplex und Verdünnungsmittel, dessen Herstellung oben beschrieben ist, so daß sie 100 Gew.-ppm Platin, berechnet als Element und bezogen auf das Gewicht der Polysiloxanmischung, enthält.
Die so erhaltene Mischung wird mittels eines Glasstabes auf 67 g/m² wiegendes, satiniertes und auch gegenüber Wasser saugarmes Pergaminpapier in einer Menge von etwa 3,8 g/m² aufgetragen. Die Beschichtung vernetzt nach 35 Sekunden bei Raumtemperatur (23°C) zu einem klebfreien und migrationsfreien Überzug, der nach weiteren 10 Sekunden Lagern bei Raumtemperatur (23°C) abriebfest ist.
Prüfwerte nach FINAT 10 und 11 zur Bestimmung des Trennwerts und der Restklebekraft, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651", "Tesafilm K 7476" und "Tesafilm A 7475" (Fa. Beiersdorf AG, Hamburg, Bundesrepublik Deutschland; der Wortteil "Tesa" ist ein registriertes Warenzeichen) sind in der Tabelle 1 zusammengefaßt.

**Tabelle 1**

| Klebeband | Trennwert cN/cm | Restklebekraft % |
|---|---|---|
| Tesa 154 | 9,5 | 81 |
| Tesa 651 | 7,3 | |
| Tesa K 7476 | 7,9 | |
| Tesa A 7475 | 11,7 | |

Ein zweites Pergaminpapier wird, wie oben beschrieben, beschichtet und 5 Sekunden lang in einen 60°C warmen Umlufttrockenschrank gehängt. Das Pergaminpapier nimmt in dieser Zeit eine Oberflächentemperatur von 40°C an. Es wird ein kleb- und migrationsfreier und abriebfester Überzug erhalten. Die Bestimmung des Trennwerts und der Restklebekraft erfolgte nach FINAT 10 und 11, wie oben beschrieben. Die Prüfwerte sind in der Tabelle 2 zusammengefaßt.

**Tabelle 2**

| Klebeband | Trennwert cN/cm | Restklebekraft % |
|---|---|---|
| Tesa 154 | 4,7 | 93 |
| Tesa 651 | 7,4 | |
| Tesa K 7476 | 9,8 | |
| Tesa A 7475 | 9,3 | |

### Beispiel 2:

Die Arbeitsweise von Beispiel 1 wird wiederholt mit der Abänderung, daß die Mischung nicht auf Pergaminpapier sondern auf eine coronavorbehandelte, 60 µm starke HDPE-Folie (HDPE = High Density Polyethylene) deren Oberflächenspannung nach der Coronisierung 48 dyn/cm beträgt, aufgetragen wird. Die beschichtete Niederdruckpolyethylenfolie wird 6 Sekunden lang in einen 60°C warmen Umlufttrockenschrank gehängt. Die Niederdruckpolyethylenfolie nimmt in dieser Zeit eine Oberflächentemperatur von 44°C an. Es wird ein kleb- und migrationsfreier und abriebfester Überzug erhalten. Die Niederdruckpolyethylenfolie nimmt unter diesen Aushärtebedingungen keinen Schaden und schrumpft nicht. Prüfwerte nach FINAT 10 und 11 zur Bestimmung des Trennwerts und der Restklebekraft, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651", "Tesafilm K 7476" und "Tesafilm A 7475" (Fa. Beiersdorf AG, Hamburg, Bundesrepublik Deutschland; der Wortteil "Tesa" ist ein registriertes Warenzeichen) sind in der Tabelle 3 zusammengefaßt.

**Tabelle 3**

| Klebeband | Trennwert cN/cm | Restklebekraft % |
|---|---|---|
| Tesa 154 | 2,7 | 75 |
| Tesa 651 | 6,7 | |
| Tesa K 7476 | 6,3 | |
| Tesa A 7475 | 14,1 | |

### Beispiel 3:

Die Arbeitsweise von Beispiel 1 wird wiederholt mit der Abänderung, daß die Mischung nicht auf Pergaminpapier sondern auf eine coronavorbehandelte, 50 µm starke LDPE-Folie (LDPE = Low Density Polyethylene) aufgetragen wird. Die beschichtete Hochdruckpolyethylenfolie wird 6 Sekunden lang in einen 66°C warmen Umlufttrockenschrank gehängt. Die Hochdruckpolyethylenfolie nimmt in dieser Zeit eine Oberflächentemperatur von 41°C an. Es wird ein kleb- und migrationsfreier und abriebfester Überzug erhalten. Die Hochdruckpolyethylenfolie nimmt unter diesen Aushärtebedingungen keinen Schaden und schrumpft nicht. Prüfwerte nach FINAT 10 und 11 zur Bestimmung des Trennwerts und der Restklebekraft, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651", "Tesafilm K 7476" und "Tesafilm A 7475" (Fa. Beiersdorf AG, Hamburg, Bundesrepublik Deutschland; der Wortteil "Tesa" ist ein registriertes Warenzeichen) sind in der Tabelle 4 zusammengefaßt.

**Tabelle 4**

| Klebeband | Trennwert cN/cm | Restklebekraft % |
|---|---|---|
| Tesa 154 | 6,3 | 68 |
| Tesa 651 | 7,9 | |
| Tesa K 7476 | 6,6 | |
| Tesa A 7475 | 16,4 | |

### Beispiel 4:

80 Gewichtsteile des in den endständigen Einheiten Allyloxypropyldimethylsiloxygruppen aufweisenden Dimethylpolysiloxans mit einer Viskosität von 480 mm²·s⁻¹ bei 25°C, dessen Herstellung in Beispiel 1 unter c) beschrieben ist, werden mit 20 Gewichtsteilen eines Siliconharzes aus Dimethylhydrogensiloxaneinheiten und SiO₂-Einheiten mit einem Verhältnis von Dimethylhydrogensiloxaneinheiten zu SiO₂-Einheiten von 1,0 : 1,4 gemischt. Zu dieser Mischung werden 4,2 Gewichtsteile eines Mischpolymerisats aus Methylhydrogensiloxan- und Trimethylsiloxaneinheiten mit durchschnittlich 25 Methylhydrogensiloxaneinheiten je Molekül und 1,0 Gewichtsteil der Mischung aus Platin-Divinyltetramethyldisiloxan-Komplex und Verdünnungsmittel, dessen Herstellung oben beschrieben ist, zugegeben.

Das so erhaltene Gemisch wird mittels eines Glasstabes auf 67 g/m² wiegendes, satiniertes und auch gegenüber Wasser saugarmes Pergaminpapier in einer Dicke von 4 µm aufgetragen. Nach 50 Sekunden bei Raumtemperatur (23°C) vernetzt die Beschichtung zu einem kleb- und migrationsfreien und abriebfesten Überzug. Prüfwerte nach FINAT 10 und 11 zur Bestimmung des Trennwerts und der Restklebekraft, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm K 7476" und "Tesafilm A 7475" (Fa. Beiersdorf AG, Hamburg, Bundesrepublik Deutschland; der Wortteil "Tesa" ist ein registriertes Warenzeichen) sind in der Tabelle 5 zusammengefaßt.

**Tabelle 5**

| Klebeband | Trennwert cN/cm | Restklebekraft % |
|---|---|---|
| Tesa K 7476 | 12,7 | |
| Tesa A 7475 | 19,6 | |
| Tesa 154 | - | 77 |

Ein zweites Pergaminpapier wird, wie oben beschrieben, beschichtet und 7 Sekunden in einen 60°C warmen Umlufttrockenschrank gehängt. Das Pergaminpapier nimmt in dieser Zeit eine Oberflächentemperatur von 47°C an. Es wird ein kleb- und migrationsfreier und abriebfester Überzug erhalten.

### Beispiel 5:

a) 200 g des endständige Allyloxypropyldimethylsiloxygruppen aufweisenden Dimethylpolysiloxans mit einer Viskosität von 480 mm²·s⁻¹ bei 25°C, dessen Herstellung in Beispiel 1 unter c) beschrieben ist, werden mit 200 g eines endständige Hydroxylgruppen aufweisenden Dimethylpolysiloxans mit einer Viskosität von 20 000 mm²·s⁻¹ bei 25°C und 40 mg Phosphornitridchlorid in Form einer 40 %igen Lösung in Ethylacetat 3 Stunden bei 120°C äquilibriert. Zum Unwirksammachen des Phosphornitridchlorids werden 4 g MgO zugegeben und nach 16 Stunden wird das Reaktionsgemisch klar filtriert. Die flüchtigen Bestandteile werden 1 Stunde lang bei 100°C und 5 hPa (abs.) destillativ entfernt. Es wird ein endständige Allyloxypropyldimethylsiloxygruppen aufweisendes Dimethylpolysiloxan mit durchschnittlich 310 Dimethylsiloxaneinheiten erhalten, das eine Viskosität von 1 890 mm²·s⁻¹ bei 25°C und eine Jodzahl von 2,2 aufweist.
b) 100 Gewichtsteile des endständige Allyloxypropyldimethylsiloxygruppen aufweisenden Dimethylpolysiloxans mit einer Viskosität von 1 890 mm²·s⁻¹ bei 25°C, dessen Herstellung oben unter a) beschrieben ist, werden mit 1,3 Gewichtsteilen eines MischpolymerisatS aus Methylhydrogensiloxan- und Trimethylsiloxaneinheiten mit einer Viskosität von 60 mm²·s⁻¹ bei 25°C vermischt. Die Mischung wird im Kryostaten auf 0°C gekühlt und anschließend mit 100 Gew.-ppm Platin, berechnet als Element und bezogen auf die Mischung, in Form der Mischung aus Platin-Divinyltetramethyldilsiloxan-Komplex und Verdünnungsmittel, dessen Herstellung oben beschrieben wurde, versetzt. Die Topfzeit der Mischung beträgt 7 Minuten.
Die so erhaltene Mischung wird mittels eines Glasstabes auf 67 g/m² wiegendes, satiniertes und auch gegenüber Wasser saugarmes Pergaminpapier in einer Menge von etwa 3,8 g/m² aufgetragen. Das beschichtete Pergaminpapier wird 5 Sekunden lang in einen 60°C warmen Umlufttrockenschrank gehängt. Das Pergaminpapier nimmt in dieser Zeit eine Oberflächentemperatur von ca. 42°C an. Es wird ein kleb- und migrationsfreier Überzug erhalten, der nach 24 Stunden Lagern bei Raumtemperatur abriebfest ist.
Ein zweites Pergaminpapier wird, wie oben beschrieben, beschichtet und wird bei Raumtemperatur (23°C) innerhalb von 35 Sekunden zu einem kleb- und migrationsfreien Überzug vernetzt. Nach 24 Stunden Lagern bei Raumtemperatur ist der Überzug abriebfest. Prüfwerte nach FINAT 10 und 11, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651" und "Tesafilm A 7475" (Fa. Beiersdorf AG, Hamburg, Bundesrepublik Deutschland; der Wortteil "Tesa" ist ein registriertes Warenzeichen) sind in der Tabelle 6 zusammengefaßt.

**Tabelle 6**

| Klebeband | Trennwert cN/cm | Restklebekraft % |
|---|---|---|
| Tesa 154 | 4,0 | 94 |
| Tesa 651 | 8,2 | |
| Tesa A 7475 | 14,4 | |

### Beispiel 6:

a) Ethylenglycol-bisallylether wird durch Umsetzung von Allylchlorid mit Ethylenglykol analog der in Beispiel 1 unter a) beschriebenen Herstellung von Diallylether erhalten.
b) Zu 142 g Ethylenglycol-bisallylether werden 1,5 ml einer Lösung von Platintetrachlorid in 1-Octen, die 60 mg Platin, berechnet als Element, enthält, zugegeben. Zu dieser auf 130°C erhitzten Mischung werden 69 g eines Dimethylhydrogensiloxygruppen als endständige Einheiten aufweisenden Dimethylpolysiloxans mit einem durchschnittlichen Molekulargewicht von 690 g/mol zugetropft. Nach Abreaktion von mehr als 99 % aller Si-gebundenen Wasserstoffatome in dem Dimethylpolysiloxan werden alle bei 100°C und 5 hPa (abs.) flüchtigen Bestandteile destillativ entfernt. Das klare Produkt, ein Dimethylpolysiloxan mit endständigen Einheiten der Formel

CH₂=CHCH₂OCH₂CH₂O(CH₂)₃(CH₃)₂SiO_{1/2}

und einem durchschnittlichen Verhältnis von Si-gebundenen Allyloxyethyloxypropylresten zu Si-gebundenen Methylresten von 0,104 hat eine Viskosität von 13,8 mm²·s⁻¹ bei 25°C.
c) 20 g des Dimethylpolysiloxans mit endständigen Allyloxyethoxypropyldiemethylsiloxaneinheiten, dessen Herstellung oben unter b) beschrieben ist, werden mit 200 g einer Mischung von cyclischen Dimethylpolysiloxanen mit 3 bis 10 Siloxaneinheiten je Molekül und 0,5 g einer 40 %igen Lösung von Kaliumhydroxid in Methanol 4 Stunden bei 140°C äquilibriert. Das Reaktionsgemisch wird mit Essigsäure neutralisiert und unter Zusatz von 0,5 % Tonerde filtriert. Bei 100°C und 5 hPa (abs.) werden die flüchtigen Bestandteile destillativ entfernt. Das so erhaltene Dimethylpolysiloxan mit endständigen Einheiten der Formel

CH₂=CHCH₂OCH₂CH₂O(CH₂)₃(CH₃)₂SiO_{1/2}

ist ein schwach gelbes, klares Polymer mit einer Viskosität von 412 mm²·s⁻¹ bei 25°C und einer Jodzahl von 3,63 und besitzt demnach ein Molekulargewicht von ca. 14 000 g/Mol.
d) 100 Gewichtsteile des Dimethylpolysiloxans mit endständigen (Allyloxyethoxypropyl)dimethylsiloxaneinheiten und einer Viskosität von 412 mm²·s⁻¹ bei 25°C, dessen Herstellung oben unter c) beschrieben ist, werden mit 2,5 Gewichtsteilen eines Mischpolymerisats aus Methylhydrogensiloxan- und Trimethylsiloxaneinheiten mit durchschnittlich 25 Methylhydrogensiloxaneinheiten je Molekül vermischt. Die Mischung wird im Kryostaten auf + 5°C gekühlt und anschließend mit 100 Gew.-ppm Platin, berechnet als Element und bezogen auf die Mischung, in Form der Mischung aus Platin-Divinyltetramethyldisiloxan-Komplex und Verdünnungsmittel, dessen Herstellung oben beschrieben wurde, versetzt. Die Topfzeit der Mischung beträgt 38 Minuten.
Die so erhaltene Mischung wird mittels eines Glasstabes auf 67 g/m² wiegendes, satiniertes und auch gegenüber Wasser saugarmes Pergaminpapier in einer Menge von etwa 3,8 g/m² aufgetragen. Die Beschichtung vernetzt in 55 Sekunden bei Raumtemperatur (23°) zu einem kleb- und migrationsfreien Überzug.
Ein zweites Pergaminpapier wird, wie oben beschrieben, beschichtet, und 15 Sekunden in einen 60°C warmen Umlufttrockenschrank gehängt. Es wird ein kleb- und migrationsfreier Überzug erhalten. Die Ermittelung der Restklebekraft erfolgte nach FINAT 11 unter Verwendung von handelsüblichem selbstklebendem (englisch: pressure sensitive) 2,5 cm breiten Klebeband "Tesafilm Nr. 154" (Fa. Beiersdorf AG, Hamburg, Bundesrepublik Deutschland; der Wortteil "Tesa" ist ein registriertes Warenzeichen): Restklebekraft: 87 %
Ein drittes Pergaminpapier wird, wie oben beschrieben, beschichtet, und 5 Sekunden in einen 80°C warmen Umlufttrockenschrank gehängt. Es wird ein kleb- und migrationsfreier Überzug erhalten, der noch nicht abriebfest ist. Prüfwerte nach FINAT 10 und 11, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651" und "Tesafilm A 7475" (Fa. Beiersdorf AG, Hamburg, Bundesrepublik Deutschland; der Wortteil "Tesa" ist ein registriertes Warenzeichen) sind in der Tabelle 7 zusammengefaßt.

**Tabelle 7**

| Klebeband | Trennwert cN/cm | Restklebekraft % |
|---|---|---|
| Tesa 154 | 6,6 | 92 |
| Tesa 651 | 15,6 | |
| Tesa A 7475 | 56 | |

Ein viertes Pergaminpapier wird, wie oben beschrieben, beschichtet und 15 Sekunden in einen 80°C warmen Umlufttrockenschrank gehängt. Es wird ein kleb- und migrationsfreier und abriebfester Überzug erhalten.

### Beispiel 7:

a) In einen Dreihalskolben mit Innenthermometer und Rückflußkühler werden 294 g Diallylether, dessen Herstellung in Beispiel 1 unter a) beschrieben ist, zusammen mit 0,5 ml einer Lösung von Platintetrachlorid in 1-Octen, die 20 mg Platin, berechnet als Element, enthält, vorgelegt und auf Rückflußtemperatur erhitzt. Zu dieser Mischung werden dann innerhalb von zwei Stunden 101 g Methylhydrogendichlorsilan zugetropft, wobei die Gasraumtemperatur zwischen 86 und 91°C bleibt. Bei dieser Temperatur läßt man die Reaktionsmischung weitere zwei Stunden nachreagieren. Anschließend wird der überschüssige Diallylether über eine kurze Füllkörperkolonne abdestilliert und es wird dann durch fraktionierte Destillation über eine Vigreuxkolonne bei 80 bis 85°C und 7 hPa (abs.) mit 70 %iger Ausbeute (Allyloxypropyl)methyldichlorsilan erhalten.
b) Zu einer Mischung aus 100 ml konzentrierter Salzsäure, 200 ml Wasser und 600 ml Toluol wird unter starkem Rühren eine Mischung aus 195 g (1,5 Mol) Dimethyldichlorsilan und 107 g (0,5 Mol) (Allyloxypropyl)methyldichlorsilan, dessen Herstellung oben unter a) beschrieben ist, zugetropft. Die Reaktionsmischung wird dann 0,5 Stunden weitergerührt. Die Toluolphase wird dann dreimal mit je 300 ml Wasser und einmal mit 300 ml 2 %iger NaHCO₃-Lösung gewaschen. Nach Abdestillieren des Toluols wird ein klares, gelbliches Öl mit einer Viskosität von 8,2 mm²·s⁻¹ bei 25°C und einer Jodzahl von 62,5 erhalten. Das ¹H-NMR-Spektrum zeigt für das Cohydrolysat eine Verhältnis von Si-gebundenen Allyloxypropylresten zu Si-gebundenen Methylresten von 1:7.
c) 81 g des oben unter b) beschriebenen Cohydrolysats werden in Gegenwart von 100 Gewichts-ppm Phosphornitridchlorid bei 80°C im Vakuum aufpolymerisiert und dann mit 520 g eines endständige Trimethylsiloxygruppen aufweisenden Dimethylpolysiloxans mit einer Viskosität von 350 mm²·s⁻¹ bei 25°C unter Zusatz von 100 Gewichts-ppm Phosphornitridchlorid 4 Stunden bei 120°C äquilibriert. Zum Unwirksammachen des Phosphornitridchlorids wird die Reaktionsmischung 16 Stunden mit 6 g Magnesiumoxid gerührt, die Reaktionsmischung wird dann filtriert und die flüchtigen Bestandteile werden anschließend bei 100°C und 5 hPa (abs.) destillativ entfernt. Es wird eine klare gelbe Lösung mit einer Viskosität von 330 mm²·s⁻¹ bei 25°C und einer Jodzahl von 8,4 erhalten. Das so erhaltene Polymer enthält neben den endständigen Trimethylsiloxaneinheiten und den Dimethylsiloxaneinheiten je Molekül durchschnittlich 4 Allyloxypropylmethylsiloxaneinheiten.
d) 100 Gewichtsteile des je Molekül durchschnittlich 4 seitenständige Allyloxypropylgruppen aufweisenden Dimethylpolysiloxans mit einer Viskosität von 330 mm²·s⁻¹ bei 25°C, dessen Herstellung oben unter c) beschrieben ist, werden mit 5 Gewichtsteilen eines Mischpolymerisats aus Methylhydrogensiloxan- und Trimethylsiloxaneinheiten, das durchschnittlich 25 Methylhydrogensiloxaneinheiten je Molekül enthält, vermischt. Zu der Mischung wird 1 Gewichtsteil der Mischung aus Platin-Divinyltetramethyldisiloxan-Komplex und Verdünnungsmittel, dessen Herstellung oben beschrieben ist, so daß sie 100 Gew.-ppm Platin, berechnet als Element und bezogen auf das Gewicht der Polysiloxanmischung, enthält.
Die so erhaltene Mischung wird mittels eines Glasstabes auf 67 g/m² wiegendes, satiniertes und auch gegenüber Wasser saugarmes Pergaminpapier in einer Menge von etwa 3,8 g/m² aufgetragen. Die Beschichtung vernetzt nach 40 Sekunden bei Raumtemperatur (23°C) zu einem kleb- und migrationsfreien Überzug, der nach weiteren 60 Sekunden Lagern bei Raumtemperatur (23°C) noch nicht abriebfest ist. Prüfwerte nach FINAT 10 und 11 zur Bestimmung des Trennwerts und der Restklebekraft, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651", "Tesafilm K 7476" und "Tesafilm A 7475" (Fa. Beiersdorf AG, Hamburg, Bundesrepublik Deutschland; der Wortteil "Tesa" ist ein registriertes Warenzeichen) sind in der Tabelle 8 zusammengefaßt.

**Tabelle 8**

| Klebeband | Trennwert cN/cm | Restklebekraft % |
|---|---|---|
| Tesa 154 | 11,2 | 78 |
| Tesa 651 | 8,4 | |
| Tesa K 7476 | 15,8 | |
| Tesa A 7475 | 38,4 | |

Ein zweites Pergaminpapier wird, wie oben beschrieben, beschichtet, und 6 Sekunden lang in einen 60°C warmen Umlufttrockenschrank gehängt. Das Pergaminpapier nimmt in dieser Zeit eine Oberflächentemperatur von 43°C an. Es wird ein kleb- und migrationsfreier und abriebfester Überzug erhalten. Die Ermittelung des Trennwerts und der Restklebekraft erfolgte nach FINAT 10 und 11, wie oben beschrieben. Die Prüfwerte sind in Tabelle 9 zusammengefaßt:

**Tabelle 9**

| Klebeband | Trennwert cN/cm | Restklebekraft % |
|---|---|---|
| Tesa 154 | 5,7 | 86 |
| Tesa 651 | 6,9 | |
| Tesa K 7476 | 14,5 | |
| Tesa A 7475 | 14,2 | |

### Beispiel 8:

a) 20,3 g des in Beispiel 7 unter b) beschriebenen Cohydrolysats werden in Gegenwart von 100 Gewichts-ppm Phosphornitridchlorid bei 80°C im Vakuum aufpolymerisiert und dann mit 300 g des endständige Allyloxypropyldimethylsiloxygruppen aufweisenden Dimethylpolysiloxans mit einer Viskosität von 480 mm²·s⁻¹ bei 25°C, dessen Herstellung in Beispiel 1 unter c) beschrieben ist, unter Zusatz von 100 Gewichts-ppm Phosphornitridchlorid 4 Stunden bei 120°C äquilibriert. Zum Unwirksammachen des Phosphornitridchlorids wird die Reaktionsmischung 16 Stunden mit 6 g Magnesiumoxid gerührt, die Reaktionsmischung wird dann filtriert und die flüchtigen Bestandteile werden anschließend bei 100°C und 5 hPa (abs.) destillativ entfernt. Es wird ein Polymer mit einer Viskosität von 400 mm²·s⁻¹ bei 25°C und einer Jodzahl von 7,6 erhalten, das endständige Allyloxypropyldimethylsiloxaneinheiten, Dimethylsiloxaneinheiten und durchschnittlich 2 Allyloxypropylmethylsiloxaneinheiten Je Molekül enthält.
b) 100 Gewichtsteile des je Molekül durchschnittlich 2 endständige und 2 seitenständige Allyloxypropylgruppen aufweisenden Dimethylpolysiloxans mit einer Viskosität von 400 mm²·s⁻¹ bei 25°C, dessen Herstellung oben unter a) beschrieben ist, werden mit 5 Gewichtsteilen eines Mischpolymerisats aus Methylhydrogensiloxan- und Trimethylsiloxaneinheiten, das durchschnittlich 25 Methylhydrogensiloxaneinheiten je Molekül enthält, vermischt. Zu der Mischung wird 1 Gewichtsteil der Mischung aus Platin-Divinyltetramethyldisiloxan-Komplex und Verdünnungsmittel, dessen Herstellung oben beschrieben ist, so daß sie 100 Gew.-ppm Platin, berechnet als Element und bezogen auf das Gewicht der Polysiloxanmischung, enthält.
Die so erhaltene Mischung wird mittels eines Glasstabes auf 67 g/m² wiegendes, satiniertes und auch gegenüber Wasser saugarmes Pergaminpapier in einer Menge von etwa 3,8 g/m² aufgetragen. Die Beschichtung vernetzt nach 40 Sekunden bei Raumtemperatur (23°C) zu einem kleb- und migrationsfreien Überzug, der nach weiteren 60 Sekunden Lagern bei Raumtemperatur (23°C) noch nicht abriebfest ist. Prüfwerte nach FINAT 10 und 11 zur Bestimmung des Trennwerts und der Restklebekraft, abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm Nr. 154", "Tesafilm Nr. 651", "Tesafilm K 7476" und "Tesafilm A 7475" (Fa. Beiersdorf AG, Hamburg, Bundesrepublik Deutschland; der Wortteil "Tesa" ist ein registriertes Warenzeichen) sind in der Tabelle 10 zusammengefaßt.

**Tabelle 10**

| Klebeband | Trennwert cN/cm | Restklebekraft % |
|---|---|---|
| Tesa 154 | 10,6 | 72 |
| Tesa 651 | 7,4 | |
| Tesa K 7476 | 12,2 | |
| Tesa A 7475 | 40,4 | |

Ein zweites Pergaminpapier wird, wie oben beschrieben, beschichtet, und 6 Sekunden lang in einen 60°C warmen Umlufttrockenschrank gehängt. Es wird ein kleb- und migrationsfreier und abriebfester Überzug erhalten. Die Ermittelung des Trennwerts und der Restklebekraft erfolgte nach FINAT 10 und 11, wie oben beschrieben. Die Prüfwerte sind in Tabelle 11 zusammengefaßt:

**Tabelle 11**

| Klebeband | Trennwert cN/cm | Restklebekraft % |
|---|---|---|
| Tesa 154 | 5,4 | 80 |
| Tesa 651 | 4,8 | |
| Tesa K 7476 | 8,5 | |
| Tesa A 7475 | 14,6 | |

## Patentansprüche

1. Vernetzbare Zusammensetzungen auf Grundlage von
(1) alkenyloxyfunktionellem Organopolysiloxan enthaltend Si-gebundene Reste Y der Formel
-(CH₂)₂-R¹-(A-R²)_{z}-O-R³-CH=CH₂ , (I)
wobei A -O-, -S- oder 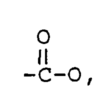 R¹ einen linearen oder verzweigten Alkylenrest mit 1 bis 7 Kohlenstoffatom(en) je Rest oder einen Cycloalkylenrest mit 5 bis 7 Kohlenstoffatomen je Rest,
R² einen linearen oder verzweigten Alkylenrest mit 2 bis 4 Kohlenstoffatomen je Rest, der durch eine Hydroxygruppe, Methoxygruppe, Ethoxygruppe oder Trimethylsiloxygruppe substituiert sein kann,
R³ einen linearen oder verzweigten Alkylenrest mit 1 bis 7 Kohlenstoffatom(en) je Rest und
z 0, 1 oder 2 bedeutet,
(2) Si-gebundene Wasserstoffatome aufweisendem Organopolysiloxan und
(3) die Anlagerung von Si-gebundenem Wasserstoff an aliphatische Doppelbindung förderndem Katalysator.

2. Zusammensetzungen nach Anspruch 1, dadurch gekennzeichnet, daß sie einen
(4) Inhibitor
enthalten.

3. Zusammensetzungen nach Anspruch 1 oder 2, dadurch gekennzeichnet, daß als alkenyloxyfunktionelle Organopolysiloxane (1) solche der allgemeinen Formel
Y_{c}R_{3-c}SiO(SiR₂O)ₙ(SiRYO)ₘSiR_{3-c}Y_{c} , (II)
wobei R gleich oder verschieden sein kann, einen einwertigen, gegebenenfalls substituierten Kohlenwasserstoffrest mit 1 bis 18 Kohlenstoffatom(en) je Rest bedeutet,
Y die in Anspruch 1 angegebene Bedeutung hat
c 0 oder 1,
n 0 oder eine ganze Zahl von 1 bis 1000 und
m 0 oder eine ganze Zahl von 1 bis 100 bedeutet,
mit der Maßgabe, daß durchschnittlich mindestens 1,5 Si-gebundene Reste Y enthalten sind,
verwendet werden.

4. Zusammensetzungen nach Anspruch 1, 2 oder 3, dadurch gekennzeichnet, daß Y ein Rest der Formel
-(CH₂)₃-O-CH₂-CH=CH₂
ist.

5. Zusammensetzungen nach Anspruch 1, 2, 3 oder 4, dadurch gekennzeichnet, daß Y ein Rest der Formel
-(CH₂)₃-O-CH₂-CH₂-O-CH₂-CH=CH₂
ist.

6. Verfahren zur Herstellung von klebrige Stoffe abweisenden Überzügen durch Auftragen von Zusammensetzungen, die enthalten
(1) alkenyloxyfunktionelles Organopolysiloxan enthaltend Si-gebundene Reste Y, die die in Anspruch 1, angegebene Bedeutung haben,
(2) Si-gebundene Wasserstoffatome aufweisendes Organopolysiloxan und
(3) die Anlagerung von Si-gebundenem Wasserstoff an aliphatische Doppelbindung fördernden Katalysator
auf die klebrige Stoffe abweisend zu machenden Oberflächen und anschließende Härtung der Zusammensetzungen.

7. Verfahren nach Anspruch 6, dadurch gekennzeichnet, daß die Zusammensetzungen einen
(4) Inhibitor
enthalten.

## Claims

1. Crosslinkable compositions based on
(1) organopolysiloxane having alkenyloxy functional groups and containing Si-bonded radicals Y of the formula
-(CH₂)₂-R¹-(A-R²)_{z}-O-R³-CH=CH₂, (I)
in which A denotes -O-, -S- or 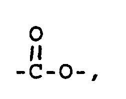 R¹ denotes a straight-chain or branched alkylene radical having 1 to 7 carbon atoms per radical or a cycloalkylene radical having 5 to 7 carbon atoms per radical,
R² denotes a straight-chain or branched alkylene radical having 2 to 4 carbon atoms per radical, which can be substituted by a hydroxyl group, methoxy group, ethoxy group or trimethylsiloxy group,
R³ denotes a straight-chain or branched alkylene radical having 1 to 7 carbon atoms per radical, and
z denotes 0, 1 or 2,
(2) organopolysiloxane containing Si-bonded hydrogen atoms, and
(3) catalyst promoting the addition of Si-bonded hydrogen to an aliphatic double bond.

2. Compositions according to Claim 1, characterized in that they contain
(4) an inhibitor.

3. Composition according to Claim 1 or 2, characterized in that the organopolysiloxanes (1) having alkenyloxy functional groups which are used are those of the general formula
Y_{c}R_{3-c}SiO(SiR₂O)ₙ(SiRYO)ₘSiR_{3-c}Y_{c}, (II)
in which R, which can be identical or different, denotes a monovalent, optionally substituted hydrocarbon radical having 1 to 18 carbon atoms per radical,
Y has the meaning stated in Claim 1,
(I) [sic]
c denotes 0 or 1,
n denotes 0 or an integer from 1 to 1,000 and
m denotes 0 or an integer from 1 to 100,
with the proviso that the organopolysiloxanes contain, on average, at least 1.5 Si-bonded radicals Y.

4. Compositions according to Claim 1, 2 or 3, characterized in that Y is a radical of the formula
-(CH₂)₃-O-CH₂-CH=CH₂

5. Compositions according to Claim 1, 2, 3 or 4, characterized in that Y is a radical of the formula
-(CH₂)₃-O-CH₂-CH₂-O-CH₂-CH=CH₂

6. Process for the production of coatings which repel sticky substances, by application of compositions which contain
(1) organopolysiloxane having alkenyloxy functional groups and containing Si-bonded radicals Y, which have the meaning stated in Claim 1,
(2) organopolysiloxane containing Si-bonded hydrogen atoms, and
(3) catalyst promoting the addition of Si-bonded hydrogen to an aliphatic double bond
to the surfaces to be rendered repellent to sticky substances and subsequent curing of the compositions.

7. Process according to Claim 6, characterized in that the compositions contain
(4) an inhibitor.

## Revendications

1. Compositions réticulables à base
(1) d'organopolysiloxane à fonction alcényloxy, contenant des radicaux Y liés à Si de formule
-(CH₂)₂-R¹-(A-R²)_{z}-O-R³-CH=CH₂ (I)
A représentant -O-, -S- ou 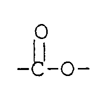 R¹ signifiant un radical alkylène linéaire ou ramifié comportant de 1 à 7 atome(s) de carbone par radical, ou un radical cycloalkylène comportant de 5 à 7 atomes de carbone par radical,
R² signifiant un radical alkylène linéaire ou ramifié comportant de 2 à 4 atomes de carbone par radical, qui peut être substitué par un groupe hydroxy, méthoxy, éthoxy ou triméthylsiloxy,
R³ signifiant un radical alkylène linéaire ou ramifié comportant de 1 à 7 atome(s) de carbone par radical, et
z signifiant 0, 1 ou 2,
(2) d'organopolysiloxane présentant des atomes d'hydrogène liés à Si, et
(3) de catalyseur favorisant l'addition de l'hydrogène lié à Si sur la double liaison aliphatique.

2. Compositions selon la revendication 1, caractérisés en ce qu'elles contiennent un inhibiteur (4).

3. Compositions selon la revendication 1 ou 2, caractérisées en ce qu'on utilise en tant qu'organopolysiloxanes (1) à fonction alcényloxy, ceux qui répondent à la formule générale
Y_{c}R_{3-c}SiO(SiR₂O)ₙ(SiRYO)ₘSiR_{3-c}Y_{c} (II)
les radicaux R pouvant être identiques ou différents, signifiant un radical hydrocarboné monovalent, éventuellement substitué, comportant 1 à 18 atome(s) de carbone par radical,
Y ayant la signification donnée dans la revendication 1,
c signifiant 0 ou 1,
n signifiant 0 ou un nombre entier de 1 à 1000, et
m signifiant 0 ou un nombre entier de 1 à 100,
à la condition qu'ils contiennent en moyenne au moins 1,5 radicaux Y liés à Si.

4. Compositions selon la revendication 1, 2 ou 3, caractérisées en ce que Y est un radical de formule
-(CH₂)₃-O-CH₂-CH=CH₂

5. Compositions selon la revendication 1, 2, 3 ou 4, caractérisées en ce que Y est un radical de formule
-(CH₂)₃-O-CH₂-CH₂-O-CH₂-CH=CH₂

6. Procédé pour la préparation de revêtements non adhérents pour les matières adhésives par application de compositions qui contiennent
(1) un organopolysiloxane à fonction alcènyloxy contenant des radicaux Y liés à Si ayant la signification donnée dans la revendication 1,
(2) un organopolysiloxane présentant des atomes d'hydrogène liés à Si, et
(3) un catalyseur favorisant l'addition de l'hydrogène lié à Si sur la double liaison aliphatique
sur les surfaces à rendre non adhérentes pour les matières adhésives, et le durcissement ultérieur des compositions.

7. Procédé selon la revendication 6, caractérisé en ce que les compositions contiennent un inhibiteur (4).
